# EUROPÄISCHE PATENTANMELDUNG

(11) **EP 2 626 995 A1**
(43) Veröffentlichungstag der Anmeldung: **14.08.2013**
(21) Anmeldenummer: 12155053.7
(22) Anmeldetag: 13.02.2012
(51) Int. Cl.: H02M 7/5387, H02M 1/32

(54) **Verfahren zum Schutz eines Frequenzumrichters bei unsymmetrischen elektrischen Leistungsflüssen**

(71) Anmelder: Siemens Aktiengesellschaft, 80333 München (DE)
(72) Erfinder: Becker, Arnd, 91086 Aurachtal-Münchaurach (DE); Kaiser, Matthias, 91077 Neunkirchen a. Brand (DE); Künzel, Stefan, 91056 Erlangen (DE)

(57) **Zusammenfassung**

Die Erfindung betrifft ein System aus einem Frequenzumrichter (12) und einer Reglereinrichtung (22) für eine elektrische Maschine (10), wobei eine Überwachungseinrichtung (34) des Frequenzumrichters (12) dazu ausgelegt ist, in einem Zwischenkreis (18) des Frequenzumrichters (12) ein Signal einer elektrischen Größe (Uzk) zu erfassen, eine Welligkeit des Signals zu ermitteln, in Abhängigkeit von der ermittelten Welligkeit einen Höchstwert (40) zu einem Betriebsparameter des Frequenzumrichters (12) festzulegen und den Höchstwert (40) an die Reglereinrichtung (22) zu übermitteln, und wobei die Reglereinrichtung (22) dazu ausgebildet ist, einen Sollwert (56) zu einer Betriebsgröße der elektrischen Maschine (10) zu ermitteln, den Sollwert (56) in Abhängigkeit von dem empfangenen Höchstwert (40) zu begrenzen und die Betriebsgröße der elektrischen Maschine (10) auf den begrenzten Sollwert einzuregeln.

## Beschreibung

Die Erfindung betrifft ein Verfahren zum Vermeiden einer Beschädigung eines Frequenzumrichters bei einem unsymmetrischen elektrischen Leistungsfluss während eines Betriebs einer elektrischen Maschine. Zu der Erfindung gehört auch ein System, das einen Frequenzumrichter und einer Reglereinrichtung für eine elektrische Maschine, also z.B. eine Antriebsregelung, umfasst. Schließlich gehört zu der Erfindung auch ein Frequenzumrichter, welcher in dem System verwendbar ist.

An Frequenzumrichter werden zunehmend höhere Anforderungen hinsichtlich ihrer Robustheit bei einem Betrieb an einem nicht stabilen Versorgungsnetz gestellt. Unter wechselhaften oder instabilen Netzwerken ist hierbei zu verstehen, dass bei einem mehrphasigen Versorgungsnetz, also beispielsweise einem dreiphasigen Drehstromnetz (50/60 Hz, 430 V), für eine oder mehrere Schwingungsperioden der Wechselspannung eine der Phasen keine Spannung führt oder die Amplituden der Spannungen der einzelnen Phasen unterschiedlich sind. Mit anderen Worten erfolgt eine unsymmetrische Versorgung. Auch in solchen Fällen wird dennoch ein robuster Betrieb erwartet. Diese Anforderung nehmen zu, da Frequenzumrichter vermehrt auch in Ländern eingesetzt werden, in denen die Netzverhältnisse nicht so stabil wie in Europa oder Nordamerika sind. Solche Netze sind z.B. in den BRIC-Staaten (BRIC-Staatengruppe bestehend aus Brasilien, Russland, Indien und China) anzutreffen.

Bei einem Frequenzumrichter, der an ein instabiles Versorgungsnetz angeschlossen ist und über den beispielsweise ein Elektromotor betrieben wird, kann sich bei unsymmetrischer Versorgung in dessen Einspeiseeinrichtung eine Überlastung einzelner Phasen ergeben. Auch der Kondensator eines Zwischenkreises des Frequenzumrichters kann überlastet werden. Dies ist im Folgenden genauer erläutert: Die Einspeiseeinrichtung dient zum Gleichrichten der mehrphasigen Netzspannung. Die gleichgerichtete Netzspannung, d.h. die Ausgangsspannung der Einspeiseeinrichtung, wird in dem Zwischenkreiskondensator gespeichert und steht als geglättete Zwischenkreisspannung für die Versorgung eines geregelten Wechselrichters bereit, welcher einen Drehstrom für den Elektromotor erzeugt. Bei einem stabilen Betrieb des Versorgungsnetzes fließt die elektrische Leistung zu gleichen Teilen über die einzelnen Phasen des Netzes und durch die gleichrichtenden Elemente der Einspeiseeinrichtung. Die Einspeiseeinrichtung kann beispielsweise aus drei Halbbrücken bestehen, die in jedem Zweig eine Diode oder eine Thyristor für die Gleichrichtung aufweisen. Während eines Betriebes der elektrischen Maschine fließt die aus dem Versorgungsnetz empfangene Leistung dann aus dem Zwischenkreis über den geregelten Wechselrichter wieder aus dem Frequenzumrichter in den Elektromotor ab. Fällt nun eine der Phasen des Versorgungsnetzes aus, nimmt der Leistungszufluss aus dem Versorgungsnetz ab, während die elektrische Maschine weiterhin die ursprüngliche Leistungsanforderung beibehält. Hierdurch ergibt sich während der einzelnen Perioden der Wechselspannung eine stärkere Entladung des Zwischenkreiskondensators, wodurch der über seine Anschlüsse fließende Stromfluss ansteigt, womit beispielsweise größere thermische Belastungen des Zwischenkreiskondensators einhergehen. Genauso wird der Zwischenkreiskondensator beim Ausfall einer Phase nur über die verbleibenden Phasen aufgeladen, sodass durch die entsprechenden Halbbrücken ebenfalls ein größerer Strom fließt. Dies kann zu einer thermischen Überlastung dieser Halbbrücken, insbesondere der darin enthaltenen Ventile, also beispielsweise Dioden, führen.

Zum Schutz der netzseitigen Ventile und des Zwischenkreiskondensators des Umrichters bei Phasenausfall oder starken Netzunsymmetrien wird deshalb bislang im Fehlerfall der maschinenseitige Wechselrichter deaktiviert, sodass keine elektrische Leistung mehr von dem Zwischenkreis zur elektrischen Maschine abfließen kann. Dies kann beispielsweise dadurch geschehen, das die Steuerpulse der Antriebsregelung der elektrischen Maschine blockiert werden, mittels welchen die Antriebsregelung die Schalter des Wechselrichters steuert, um den Drehstrom in der elektrischen Maschine zu erzeugen. Ein entsprechendes Schutzverfahren ist beispielsweise aus der DE 10 2004 030 535 A1 bekannt.

Durch Deaktivieren des Wechselrichters steht die Anlage (Frequenzumrichter und elektrische Maschine) dann aber still und es muss abgewartet werden, bis der Anwender den Fehler quittiert hat. An Versorgungsnetzen, in welchen solche Instabilitäten öfter vorkommen, also etwa mehrmals am Tag, bedeutet dies eine ernsthafte Beeinträchtigung der Wirtschaftlichkeit der Anlage.

Eine der Erfindung zugrunde liegende objektive technische Aufgabe besteht darin, einen wirtschaftlichen Betrieb einer elektrischen Maschine auch bei nicht stabilen Netzverhältnissen zu gewährleisten.

Die Aufgabe wird durch ein Verfahren gemäß Patentanspruch 1, ein System gemäß Patentanspruch 8 und einen Frequenzumrichter gemäß Patentanspruch 9 gelöst. Vorteilhafte Weiterbildungen der Erfindung sind durch die Unteransprüche gegeben.

Durch die vorliegende Erfindung ist ein Verfahren bereitgestellt, mit dem man einerseits den Schutz des Frequenzumrichters sicherstellen und andererseits das Auslösen eines Fehlers vermeiden kann, durch welchen dann die Anlage stillsteht. Nach dem erfindungsgemäßen Verfahren wird durch eine Überwachungseinrichtung des Frequenzumrichters in dem Zwischenkreis ein Signal einer elektrischen Größe erfasst. Bezüglich des Signals wird bevorzugt ein zeitlicher Verlauf einer gleichgerichteten elektrischen Spannung des Zwischenkreises und/oder der zeitliche Verlauf eines elektrischen Stromes in dem Zwischenkreis gemessen. Die Überwachungseinrichtung kann beispielsweise durch einen Signalprozessor realisiert sein, wie er bei Leistungsteilen, wie einem Frequenzumrichter, in Form eines ASIC (application specific integrated circuit) oder eines FPGA (field programmable gate array), auch bereitgestellt wird, um Spannungen in dem Frequenzumrichter einzustellen und andere Schutzfunktionen des Leistungsteils anzubieten.

Das hier vorgestellte Verfahren sieht nun vor, das durch die Überwachungseinrichtung zusätzlich ein Wert eines Signalparameters ermittelt wird, der von einer Welligkeit des erfassten Signals abhängt. Ein solcher Signalparameter kann beispielsweise ein Signalhub sein, also die Differenz zwischen einem innerhalb eines vorbestimmten Zeitintervalls beobachteten maximalen Amplitudenwert und dem in demselben Zeitintervall beobachteten minimalen Amplitudenwert. Hinter diesem Schritt steht die Erkenntnis, dass die Welligkeit des Signals zunimmt, wenn der elektrische Leistungsfluss aus dem Versorgungsnetz in dem Zwischenkreis oder (im Falle eines generatorischen Betriebs der elektrischen Maschine) aus dem Zwischenkreis in das Versorgungsnetz insgesamt unsymmetrisch ist.

Besonders deutlich kann eine solche Asymmetrie erkannt werden, wenn der zeitliche Verlauf der gleichgerichteten Spannung in dem Zwischenkreis lediglich für bestimmte Frequenzen analysiert wird. Dies ist weiter unten näher erläutert. Ist nun der Wert für die Welligkeit ermittelt, so hat man hierdurch ein Maß für eine momentan vorliegende Netzunsymmetrie zur Hand. Entsprechend wird nach dem erfindungsgemäßen Verfahren in einem weiteren Schritt festgelegt, wie viel elektrische Leistungen das Versorgungsnetz und die elektrische Maschine über den Frequenzumrichter noch austauschen können, ohne dass hierbei aufgrund der Netzunsymmetrie eine Komponente des Frequenzumrichters überlastet und dadurch beschädigt wird. Entsprechend wird ein Höchstwert für eine Betriebsgröße des Frequenzumrichters in Abhängigkeit von dem ermittelten Wert für die Welligkeit durch die Überwachungseinrichtung festgelegt. Bevorzugt wird hierbei unmittelbar der Höchstwert für die elektrische Leistung bestimmt, welche über den Frequenzumrichter übertragen werden darf. Es können aber auch andere Betriebsgrößen, wie etwa ein maximal zulässiger Strom im Zwischenkreis oder andere Größen herangezogen werden, wenn dies bei einem Antriebssystem, in welchem das erfindungsgemäße Verfahren umgesetzt werden soll, zweckmäßiger ist. Der Höchstwert drückt nun also aus, dass die entsprechende Betriebsgröße diesen Höchstwert nicht überschreiten darf, da es sonst bei der ermittelten Netzunsymmetrie zu einer Beschädigung einer Komponente des Frequenzumrichters kommen kann.

Dieser Höchstwert wird in einem weiteren Schritt an eine Reglereinrichtung der elektrischen Maschine übertragen, die in der Lage ist, die Leistungsanforderungen der elektrischen Maschine beispielsweise durch entsprechendes Steuern eines Wechselrichters des Frequenzumrichters einzustellen. Die Reglereinrichtung begrenzt daraufhin anhand des Höchstwerts den für die eigentliche Regelungsaufgabe zugrunde gelegten Sollwert (Sollantriebsmoment, Solldrehzahl etc.) gezielt zu begrenzen. Hierdurch ergibt sich der Vorteil, dass bei Erkennen einer Unsymmetrie durch die Überwachungseinrichtung die elektrische Maschine durch die Reglereinrichtung weiter betrieben wird und hierbei lediglich der Leistungsbedarf der elektrischen Maschine durch Begrenzen des Sollwerts soweit reduziert wird, dass die Betriebsgröße des Frequenzumrichters, also beispielsweise die über den Frequenzumrichter übertragene elektrische Leistung, unterhalb des Höchstwerts bleibt. Die Anlage wird also nicht stillgelegt, sondern es verringert sich beispielsweise lediglich z.B. die Drehzahl der elektrischen Maschine. Für viele Anwendungen ist dies akzeptabel, sodass durch das Verfahren in diesen Fällen ein durchgehender Betrieb der Anlage auch bei wiederholt auftretenden Netzunsymmetrien gewährleistet werden kann. Für einige Anwendungen ist eine Leistungsreduktion sogar besser als eine harte Abschaltung der Anlage.

Als Reglereinrichtung eignet sich beispielsweise eine Antriebsregelung für ein Antriebsmoment eines Elektromotors oder eine Leistung des Elektromotors. Je nach Anwendung kommt auch die Antriebsregelung für eine Generatorleistung oder eine Drehzahl dafür in Frage. Genauso ist auch eine in einer Reglerkaskade innen liegende Reglereinrichtung für eine Amplitude einer momentenbildenden Komponente eines in der Maschine fließenden elektrischen Stromes für die Durchführung verwendbar.

Natürlich kann auch vorgesehen sein, dass ein Benutzer der Anlage die Wahl erhält, zu seiner Applikation die ideale Reaktion auf sporadisch auftretenden Netzunsymmetrien zu wählen. Hierzu wird das erfindungsgemäße Verfahren zweckmäßigerweise dahingehend weitergebildet, dass durch die Überwachungseinrichtung überprüft wird, ob der Wert für die Welligkeit oder ein davon abgeleiteter Wert betragsmäßig einen vorbestimmten Schwellenwert überschreitet, die Welligkeit also besonders groß ist. In einem solchen Fall kann der Umrichter, mittels welchem die elektrische Maschine betrieben wird, dann deaktiviert werden. Solange also der Schwellenwert nicht überschritten wird, findet eine Leistungsreduktion statt und erst bei Überschreiten des Schwellenwertes wird die Anlage tatsächlich stillgelegt. In jedem Fall ist aber der Schutz des Frequenzumrichters gewährleistet.

Wie wird nun der Wert für die Welligkeit am zweckmäßigsten ermittelt? Eine bevorzugte Ausführungsform des erfindungsgemäßen Verfahrens sieht hierzu vor, das Signal der elektrischen Größe mit einem Filter zu filtern, durch welchen die Amplitude eines Signalanteils bei zumindest einer vorbestimmten Frequenz bestimmt wird. Bevorzugt wird das Signal bei einer doppelten Netzfrequenz eines Versorgungsnetzes analysiert, an welchem der Frequenzumrichter betrieben wird. Bei dieser Frequenz ist die Welligkeit bei einer Netzunsymmetrie besonders deutlich ausgeprägt. Bevorzugt wird hierbei insbesondere die Zwischenkreisspannung hinsichtlich Schwingungen mit doppelter Netzfrequenz analysiert und bei Überschreiten bestimmter Amplitudengrenzwerte die beschriebene Schutzmaßnahme angeleitet. Um hierbei zum Beispiel die Welligkeit in Form des Signalhubs bei doppelter Netzfrequenz zu ermitteln, wird die Amplitude einer Schwingung mit doppelter Netzfrequenz auf der Zwischenkreisspannung daraufhin überprüft, ob sie einen vorbestimmten Grenzwert überschreitet und dann einmal pro Periode der doppelten Netzfrequenz wieder unter einem zweiten vorbestimmten Grenzwert fällt.

Um eine elektrische Maschine besonders wirtschaftlich betreiben zu können, sollte bei Auftreten einer Netzunsymmetrie der Sollwert der Regeleinrichtung der elektrischen Maschine nur gerade soweit begrenzt werden, wie es unbedingt notwendig ist, um den Schutz des Frequenzumrichters zu gewährleisten. So sollte bei lediglich für eine kurze Zeitdauer auftretenden Netzunsymmetrien der Sollwert nicht gleich stark begrenzt werden, da beispielsweise noch die Wärmekapazität der Bauelemente in der Einspeiseeinrichtung und die Wärmekapazität des Zwischenkreises genutzt werden kann. Andersherum kann es notwendig sein, bei einer nur geringfügigen Netzunsymmetrie den Sollwert stärker zu begrenzen, wenn die Netzunsymmetrie für eine lange Zeitdauer besteht. Dies liegt darin begründet, dass sich durch die Netzunsymmetrie einige Komponenten des Frequenzumrichters mit der Zeit aufheizen können, weil sich die Hitze in den Komponenten staut, sodass die Temperatur der Komponenten während des Anhaltens der Netzunsymmetrie kontinuierlich steigt. Bei einer besonders bevorzugten Ausführungsform des erfindungsgemäßen Verfahrens werden all diese Aspekte auf eine besonders einfach zu realisierende Weise berücksichtigt. Gemäß dieser Ausführungsform wird eine Differenz zwischen dem Wert für die Welligkeit und einem vorbestimmten Maximalwert gebildet und der durch die Überwachungseinrichtung festgelegter Höchstwert für die Betriebsgröße des Frequenzumrichters dann durch einen Regler der Überwachungseinrichtung in Abhängigkeit von dieser Differenz festgelegt. So kann etwa vorgesehen sein, die Differenz zwischen dem Ausgabesignal des bereits beschriebenen Filters und einem Maximalwert zu bilden und das so gebildete Signal mittels des Reglers zu verarbeiten. Bei dem Regler handelt es sich dabei bevorzugt um einen P-Regler oder einen PI-Regler.

Wie bereits Eingangs erwähnt gehört zu der Erfindung auch ein Frequenzumrichter, welcher die bereits beschriebene Überwachungseinrichtung aufweist, also eine Überwachungseinrichtung, die dazu ausgerichtet ist, folgende Verfahrensschritte durchzuführen: In einem Zwischenkreis des Frequenzumrichters wird ein Signal einer elektrischen Größe erfasst, eine Welligkeit des Signals ermittelt und ein Höchstwert zu einem Betriebsparameter des Frequenzumrichters in Abhängigkeit von der ermittelten Welligkeit bestimmt. Welches Signal, was für ein Höchstwert und wie die Welligkeit bestimmt wird, kann nach den bereits erläuterten Kriterien je nach konkretem Anwendungsfall festgelegt werden. Die Überwachungseinrichtung des erfindungsgemäßen Frequenzumrichters ist zusätzlich dazu ausgelegt, den Höchstwert an einem Signalausgang auszugeben, von wo er dann an eine Reglereinrichtung einer elektrischen Maschine übertragen werden kann. Da bei dem erfindungsgemäßen Frequenzumrichter ein besonders effizienter Schutz insbesondere der Einspeiseeinheit und des Zwischenkreiskondensators gewährleistet ist, können bei dem erfindungsgemäßen Frequenzumrichter auch besonders einfache Komponenten verwendet werden, was die Wirtschaftlichkeit des erfindungsgemäßen Frequenzumrichters noch weiter steigert. So sieht eine bevorzugte Ausführungsform vor, dass der Frequenzumrichter eine netzgeführte Einspeisung aufweist, welche dazu eingerichtet ist, eine mehrphasige Wechselspannung eines Versorgungsnetzes mittels Dioden gleichzurichten. Ein solcher Frequenzumrichter ist dann besonders kostengünstig herstellbar, was ihn insbesondere für den Einsatz in den erwähnten BRIC-Staaten attraktiv macht.

Von der Erfindung ist auch eine Kombination oder ein System aus einem Frequenzumrichter, wie er gerade beschrieben wurde, und einer Reglereinrichtung für eine elektrische Maschine umfasst. Der Frequenzumrichter und die Reglereinrichtung sind dabei dazu ausgelegt, den von der Überwachungseinrichtung des Frequenzumrichters ermittelten Höchstwert auszutauschen, wobei die Reglereinrichtung hierbei zusätzlich dazu ausgebildet ist, einen Sollwert zu einer Betriebsgröße der elektrischen Maschine (siehe die oben beispielhaft aufgeführten Betriebsgrößen Drehzahl, Drehmoment und so weiter) zu ermitteln, den Sollwert dann in Abhängigkeit von dem empfangenen Höchstwert zu begrenzen und die Betriebsgröße der elektrischen Maschine auf dem begrenzten Sollwert einzuregeln. Hierdurch ergibt sich dann die beschriebene Leistungsreduktion im Fall eines Auftretens einer Netzunsymmetrie und der damit einhergehende Schutz des Frequenzumrichters vor einer Beschädigung.

Im Folgenden wird die Erfindung noch einmal anhand von Ausführungsbeispielen konkreter erläutert. Hierzu zeigt:
- FIG 1: eine schematische Darstellung einer bevorzugten Ausführungsform des erfindungsgemäßen Systems,
- FIG 2: ein schematisiertes Blockschaltbild zu dem System von FIG 1 und
- FIG 3: ein Diagramm zu zeitlichen Verläufen einer Zwischenkreisspannung.

Bei dem im Folgenden erläuterten Beispiel stellen die hier in Kombination beschriebenen Komponenten des Systems jeweils einzelne, unabhängig voneinander zu betrachtende Merkmale des Systems dar, welche das System jeweils unabhängig voneinander Weiterbilden und damit auch einzeln oder in einer anderen als der beschriebenen Kombination als Bestandteil der Erfindung anzusehen sind.

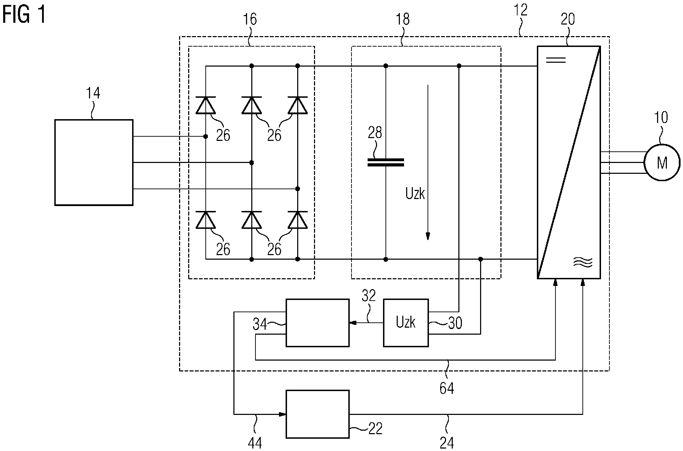

FIG 1 zeigt eine elektrische Maschine 10, die über einen Frequenzumrichter 12 an ein elektrisches Versorgungsnetz 14 angeschlossen ist. Die elektrische Maschine 10 kann beispielsweise eine Synchron- oder eine Asynchronmaschine sein. Sie kann z.B. als Generator oder als Elektromotor oder auch abwechselnd im generatorischen und motorischen Betrieb betrieben sein. Bei dem in FIG 1 gezeigten elektrischen Versorgungsnetz 14 kann es sich z.B. um ein dreiphasiges Drehstromnetz handeln, etwa ein 50 Hz oder 60 Hz Versorgungsnetz mit einer verketteten Spannung von 430 V.

Der Frequenzumrichter 12 weist eine Einspeiseeinrichtung 16, einen Zwischenkreis 18 und (wie in FIG 1 gezeigt) ein oder mehrere steuerbare Wechselrichter 20 auf. Eine Drehzahl der elektrischen Maschine 10 oder ein von ihr erzeugtes Drehmoment wird durch eine Reglereinrichtung 22 geregelt, die zum Einstellen des entsprechend benötigten Drehstroms in Spulen der elektrischen Maschine 10 Steuerpulse über eine Steuerleitung 24 in der an sich bekannten Weise an den Wechselrichter 20 überträgt.

Bei der Einspeiseeinrichtung 16 kann es sich beispielsweise um einen besonders günstig herstellbaren Halbbrückengleichrichter mit Dioden 26 handeln. Der Zwischenkreis 18 kann einen Zwischenkreiskondensator 28 oder mehrere davon aufweisen. Die Einspeiseeinrichtung 16, der Zwischenkreis 18 und der Wechselrichter 20 können in einer aus dem Stand der Technik an sich bekannten Weise aufgebaut sein. Sie müssen nicht angepasst werden, um die im Folgenden erläuterte Erfindung realisieren zu können.

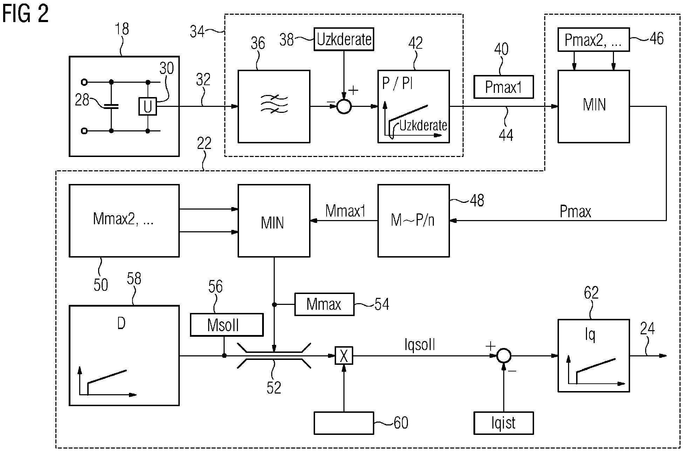

Durch eine Spannungsmesseinrichtung 30 wird eine hier über dem Zwischenkreiskondensator 28 abfallenden Zwischenkreisspannung Uzk gemessen. Das Messsignal wird über eine Messleitung 32 an eine Überwachungseinrichtung 34 übertragen. Die Spannungsmesseinrichtung 30 und die Überwachungseinrichtung 34 können beispielsweise durch einen Mikrokontroller oder ein ASIC oder ein FPGA realisiert sein. Bei der Messleitung 32 kann es sich also auch um eine digitale, logische Verbindung handeln. Die Überwachungseinrichtung 34 kann mehrere Schutzfunktionalitäten bereitstellen, von denen hier nur die im Zusammenhang mit der Erfindung relevante Funktionalität im Folgenden anhand von FIG 1 und FIG 2 erläutert wird.

Das Messsignal der Spannungsmesseinrichtung 30 wird durch die Überwachungseinrichtung 34 mittels eines Filters 36, beispielsweise eines Bandpassfilters, gefiltert, wodurch die Amplitude einer Schwingung der Zwischenkreisspannung z.B. bei doppelter Netzfrequenz ausgewertet wird. Das Ausgangssignal des Filters 36 wird dahingehend überprüft, ob seine Amplitude einen Maximalwert 38 überschreitet. Ist dies der Fall, so wird die maximal von der elektrischen Maschine 10 aus dem Versorgungsnetz 14 beziehbare elektrische Leistung Pmax1 reduziert. Hierzu wird in Abhängigkeit von einem Ausmaß, in welchem der Maximalwert 38 überschritten ist, mittels eines Reglers 42, beispielsweise eines P-Reglers oder eines PI-Reglers, ein Höchstwert 40 ermittelt.

Der ermittelte Höchstwert 40 kann über eine digitale Schnittstelle 44 an die Reglereinrichtung 22 übertragen werden. Bei der digitalen Schnittstelle 44 kann es sich beispielsweise um die bei der Antriebsfamilie SINAMICS des Unternehmens Siemens AG verwendete, serielle digitale Schnittstelle Drive-Cliq handeln. Die digitale Schnittstelle 44 ist für die Realisierung der Erfindung dabei dahingehend erweitert, dass die für den Frequenzumrichter 12 ermittelte maximal zulässige Leistung Pmax1, d. h. der Höchstwert 40, von der Überwachungseinrichtung 34 zur Reglereinrichtung 22 übertragen wird.

In der Reglereinrichtung 22 wird nun dieser Höchstwert 40 bei der Bildung einer Drehmomentgrenze berücksichtigt, wodurch dann die Leistung der elektrischen Maschine 10 soweit reduziert wird, dass der Leistungsteilschutz, d.h. der Schutz des Frequenzumrichters 12, gewährleistet ist. Die Reglereinrichtung 22 bietet die Möglichkeit, weitere Höchstwerte 46 für die von der elektrischen Maschine 10 aufgenommene oder abgegebene Leistung vorzugeben. Das Minimum der Höchstwerte 44, 46 ergibt die Gesamthöchstleistung Pmax. Aus dieser wird durch eine Umrechnung 48 ein leistungsbedingtes maximales Drehmoment Mmax1 der elektrischen Maschine 10 ermittelt werden (das Drehmoment M ist proportional zur Leistung P geteilt durch die momentane Drehzahl n der elektrischen Maschine 10, d.h. M ∼ P/n). Weitere Drehmomentvorgaben 50 werden durch Bilden eines Minimums berücksichtigt, woraus sich das Gesamtdrehmoment Mmax für eine Drehmomentbegrenzung 52 ergibt. Das Gesamtdrehmoment Mmax für die Begrenzung 52 stellt hier eine Reglersollwertbegrenzung 54 dar, die in Abhängigkeit von dem Höchstwert 40 gebildet ist. Die Begrenzung 52 wirkt auf einen Sollwert 56 für das Drehmoment, der von einem Drehzahlregler 58 festgelegt wird. Der begrenzte Sollwert wird mittels eines Drehmomentfaktors 60 in eine Sollwertvorgabe Iqsoll für einen Stromregler 62 umgewandelt, welcher eine momentenbildende Komponente Iq eines Stromes in der elektrischen Maschine 10 in Abhängigkeit von dem Sollwert Iqsoll und einem gemessenen Istwert Iqist der momentenbildenden Komponente Iq regelt. Die Regelung ist feldorientiert. Durch den Stromregler 62 werden die Steuerimpulse ermittelt, welche über die Steuerleitung 24 zu dem Wechselrichter 20 übertragen werden.

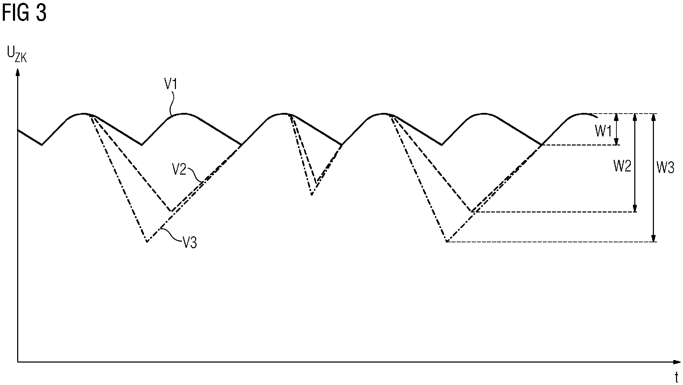

In FIG 3 ist die Schutzfunktion noch einmal erläutert, wie sie durch das in FIG 1 und FIG 2 dargestellte System realisiert wird. In FIG 3 ist ein Verlauf der Zwischenkreisspannung Uzk über der Zeit t aufgetragen, wie er sich bei symmetrischer Netzspannung des Versorgungsnetzes 14 ergeben kann (Verlauf V1). Eine Wellig W1 d.h. ein Hub zwischen maximal und minimal auftretenden Amplituden der Zwischenkreisspannung Uzk ist bei dem Verlauf V1 verhältnismäßig gering. Für eine Netzunsymmetrie (hier sei der Ausfall einer Phase angenommen) ergibt sich ein Verlauf V2 mit einer Welligkeit W2 bzw. (bei einem großen Leistungsbedarf der elektrischen Maschine 10) ein Verlauf V3 mit einer Welligkeit W3. Das Ausgabesignal des Filters 36 weist eine Amplitude auf, die von den Welligkeiten W1, W2, W3 abhängt. Überschreitet die Amplitude den Maximalwert 38 (Uzkderate), so wird die maximal zulässige Leistung Pmax1 in der beschriebenen Weise reduziert. Diese ist in dem Beispiel bei den Welligkeiten W2 und W3 der Fall.

Die bei der Welligkeit W2 eingeleitete Leistungsreduktion verkleinert die Amplitude der Schwingung der Zwischenkreisspannung wieder, sodass die elektrische Maschine 10 weiterbetrieben werden kann. Unterschreitet die Amplitude dabei einen weiteren Grenzwert Uzkmin, so wird die maximal zulässige Leistung wieder vergrößert, was sich hier automatisch durch die Berechnung des Höchstwerts 40 mittels des Reglers 42 ergibt. Damit kann flexibel auch sporadisch auftretenden Netzunsymmetrien reagiert werden.

Der Maximalwert 38 (Uzkderate) liegt unterhalb eines Grenzwertes Uzkfault. Der Grenzwert Uzkfault wird bei der Welligkeit W3 überschritten. In diesem Fall wird nicht mehr die Leistung der elektrischen Maschine reduziert, sondern es wird zur Erzeugen eines Signals in einer Sperrleitung 64 von der Überwachungseinrichtung 34 eine Deaktivierung des Wechselrichters 20 ausgelöst, indem die über die Steuerleitung 24 übertragenen Impulse blockiert werden.

Insgesamt ist durch das Beispiel gezeigt, wie auf Netzunsymmetrien, die aufgrund des gefahrenen Lastspiels zu einer Schädigung eines Frequenzumrichters führen würden, rechtzeitig mit einer Leistungsreaktion reagiert werden kann, sodass ein Fehlerzustand (Unterbrechen des Betriebs einer Anlage) vermieden werden kann. Damit kann einerseits der Schutz eines Frequenzumrichters sichergestellt und andererseits das Auslösen eines Notstops vermieden werden.

## Patentansprüche

1. Verfahren zum Vermeiden einer Beschädigung eines Frequenzumrichters (12) bei einem unsymmetrischen elektrischen Leistungsfluss während eines Betriebs einer elektrischen Maschine (10), umfassend die Schritte:
- Erfassen eines Signals (V1, V2, V3) einer elektrischen Größe (Uzk) in einem Zwischenkreis (18) des Frequenzumrichters (12) durch eine Überwachungseinrichtung (34),
- Ermitteln eines Werts eines Signalparameters, der von einer Welligkeit (W1, W2, W3) des Signals (V1, V2, V3) abhängig ist, durch die Überwachungseinrichtung (34),
- Festlegen eines Höchstwerts (40) für eine Betriebsgröße des Frequenzumrichters (12) in Abhängigkeit von dem ermittelten Wert für die Welligkeit (W1, W2, W3) durch die Überwachungseinrichtung (34) und
- Begrenzen (52) eines Sollwerts (56) einer Reglereinrichtung (22) der elektrischen Maschine (10) in Abhängigkeit von dem Höchstwert (40).

2. Verfahren nach Anspruch 1, wobei als das Signal ein zeitlicher Verlauf (V1, V2, V3) einer gleichgerichteten elektrischen Spannung (Uzk) des Zwischenkreises (18) und/oder derjenige eines elektrischen Stromes in dem Zwischenkreis (18) gemessen wird.

3. Verfahren nach Anspruch 1 oder 2, wobei der Wert für die Welligkeit (W1, W2, W3) ermittelt wird, indem das Signal (V1, V2,V3) mit einem Filter (36) gefiltert wird, durch welchen die Amplitude eines Signalanteils bei zumindest einer vorbestimmten Frequenz bestimmt wird, wobei die vorbestimmte Frequenz bevorzugt die doppelte Netzfrequenz eines Versorgungsnetzes (14) ist, an welchem der Frequenzumrichter (12) betrieben wird.

4. Verfahren nach einem der vorhergehenden Ansprüche, wobei eine Differenz zwischen dem Wert für die Welligkeit (W1, W2, W3) und einem vorbestimmten Maximalwert (38) gebildet wird und der Höchstwert (40) für die Betriebsgröße des Frequenzumrichters (12) durch einen Regler (42) der Überwachungseinrichtung (34) und in Abhängigkeit von der Differenz festgelegt wird.

5. Verfahren nach einem der vorhergehenden Ansprüche, wobei der Höchstwert (40) für eine elektrische Leistung bestimmt wird, welche über den Frequenzumrichter (12) übertragen wird.

6. Verfahren nach einem der vorhergehenden Ansprüche, wobei durch die Reglereinrichtung (22) eine Betriebsgröße der elektrischen Maschine (10) auf den begrenzten Sollwert geregelt wird und hierbei die Betriebsgröße umfasst: ein Antriebsmoment, eine Generatorleistung, eine Drehzahl, eine Motorleistung, eine Amplitude einer momentenbildenden Komponente eines in der Maschine fließenden elektrischen Stromes.

7. Verfahren nach einem der vorhergehenden Ansprüche, wobei durch die Überwachungseinrichtung (34) überprüft wird, ob der Wert für die Welligkeit (W1, W2, W3) oder ein davon abgeleiteter Wert betragsmäßig einen vorbestimmten Schwellenwert überschreitet, und gegebenenfalls denjenigen Umrichter (20) des Frequenzumrichters (12) zu deaktivieren, mittels welchem die elektrische Maschine (10) betrieben wird.

8. System aus einem Frequenzumrichter (12) und einer Reglereinrichtung (22) für eine elektrische Maschine (10), wobei eine Überwachungseinrichtung (34) des Frequenzumrichters (12) dazu ausgelegt ist, in einem Zwischenkreis (18) des Frequenzumrichters (12) ein Signal (V1, V2, V3) einer elektrischen Größe (Uzk) zu erfassen, eine Welligkeit (W1, W2, W3) des Signals (V1, V2, V3) zu ermitteln, in Abhängigkeit von der ermittelten Welligkeit (W1, W2, W3) einen Höchstwert (40) zu einem Betriebsparameter des Frequenzumrichters (12) festzulegen und den Höchstwert (40) an die Reglereinrichtung (22) zu übermitteln, und wobei die Reglereinrichtung (22) dazu ausgebildet ist, einen Sollwert (56) zu einer Betriebsgröße der elektrischen Maschine (10) zu ermitteln, den Sollwert (56) in Abhängigkeit von dem empfangenen Höchstwert (40) zu begrenzen und die Betriebsgröße der elektrischen Maschine (10) auf den begrenzten Sollwert einzuregeln.

9. Frequenzumrichter (12), welcher eine Überwachungseinrichtung (34) aufweist, welche dazu eingerichtet ist, in einem Zwischenkreis (18) des Frequenzumrichters (12) ein Signal (V1, V2, V3) einer elektrischen Größe (Uzk) zu erfassen, eine Welligkeit (W1, W2, W3) des Signals (V1, V2, V3) zu ermitteln, einen Höchstwert (40) zu einem Betriebsparameter des Frequenzumrichters (12) in Abhängigkeit von der ermittelten Welligkeit (W1, W2, W3) zu bestimmen und den Höchstwert (40) an einem Signalausgang (44) auszugeben.

10. Frequenzumrichter (12) nach Anspruch 9, bei dem die Überwachungseinrichtung (34) einen Regler (42), insbesondere einen P-Regler oder einen PI-Regler, aufweist, welcher dazu eingerichtet ist, den Höchstwert (40) auf der Grundlage der ermittelten Welligkeit (W1, W2, W3) zu berechnen.

11. Frequenzumrichter (12) nach Anspruch 9 oder 10, wobei der Frequenzumrichter (12) eine netzgeführte Einspreisung (16) aufweist, welche dazu eingerichtet ist, eine mehrphasige Wechselspannung eines Versorgungsnetzes (14) mittels Dioden (26) gleichzurichten.
